# EUROPÄISCHE PATENTSCHRIFT

(11) **EP 1 372 857 B1**
(45) Veröffentlichungstag und Bekanntmachung des Hinweises auf die Patenterteilung: **01.03.2006**
(21) Anmeldenummer: 02729812.4
(22) Anmeldetag: 21.03.2002
(51) Int. Cl.: B02C 18/06, B02C 18/14, B02C 18/22, B02C 19/00

(54) **VORRICHTUNG ZUM ZERKLEINERN VON KUNSTSTOFFGEBILDEN MIT GERINGER MATERIALSTÄRKE**
DEVICE FOR SHREDDING PLASTIC STRUCTURES HAVING A LOW THICKNESS
DISPOSITIF POUR BROYER DES PRODUITS EN MATIERE PLASTIQUE DE FAIBLE EPAISSEUR

(30) Priorität: 22.03.2001 DE 10113953
(43) Veröffentlichungstag der Anmeldung: 02.01.2004
(73) Patentinhaber: TLT TRANSPORT- UND LAGERTECHNIK GmbH, 49824 Ringe (DE)
(72) Erfinder: WOELFLE, Paul, 47809 Krefeld (DE)
(74) Vertreter: Müller, Karl-Ernst
(86) Internationale Anmeldenummer: PCT/DE2002/001031
(87) Internationale Veröffentlichungsnummer: WO 2002/076617

(56) Entgegenhaltungen:
- DE-A- 3 703 309
- GB-A- 2 030 472
- GB-A- 2 120 969

## Beschreibung

Die Erfindung betrifft eine Vorrichtung zum Zerkleinern von Kunststoffgebilden mit geringer Materialstärke wie PET-Flaschen, Bechern, Folien oder dergleichen, mit einem Mahlreaktor, dessen äußerer Mantel wenigstens teilweise durch ein Siebgewebe gebildet und in dem wenigstens ein feststehendes Gegenmesser angeordnet ist, und in dessen Innenraum ein Rotor mit wenigstens einem davon getragenen Schneidmesser umläuft, sowie mit einer Zuführung für die zu zerkleinernden Kunststoffgebilde.

Eine Vorrichtung mit den vorgenannten Merkmalen ist aus der EP 0 064 596 A2 bekannt. Bei derartigen Schneidmühlen sind auf dem Umfang einer sich axial durch den Innenraum eines Mahlreaktors erstreckenden Rotorwelle ggf. mehrere Reihen von Schneidmessern angeordnet, denen in dem den Innenraum umschließenden, aus Siebgewebe bestehenden äußeren Mantel des Mahlreaktors eingelassene ortsfeste Gegenmesser zugeordnet sind, an denen die von der Rotorwelle getragenen Schneidmesser mit geringem Abstand vorbeilaufen. Über einen radial zur Rotorwelle angeordneten Zufuhrschacht wird das zu zerkleinernde Kunststoffmaterial in den Innenraum des Mahlreaktors eingebracht.

Eine weitere Vorrichtung mit den Merkmalen des Oberbegriffs des Anspruchs 1 ist aus der DE 37 03 309 A bekannt.

Mit der bekannten Schneidmühle ist der Nachteil verbunden, daß die Zuführung von Kunststoffgebilden mit geringer Wandstärke, also einem gewichtsmäßig leichten Material, nicht mit dem erforderlichen Durchsatz unmittelbar in den Mahlraum hinein erfolgen kann, weil beispielsweise aufgrund der radialen Zufuhr des Mahlgutes das Mahlgut nicht ausreichend von den an der Rotorwelle angeordneten Schneidmessern erfaßt und eingezogen wird, sondern davon zurückprallt. Aus diesem Grunde werden in einer aufwendigen Weise derartige Kunststoffgebilde zu Gebinden gepresst, und die gepressten Ballen werden in den Mahlreaktor gedrückt und hier an ihrer in den Innenraum des Mahlreaktors ragenen Fläche von den umlaufenden Schneidmessern der Rotorwelle erfaßt. Das abgeschnitte Gut wird in dem Mahlreaktor zwischen den umlaufenden Schneidmessern und den feststehenden Gegenmessern bis auf die durch die Maschenweite des den äußeren Mantel des Mahlreaktors bildenden Siebgewebes vorgegebene Korngröße zerkleinert.

Der Erfindung liegt daher die Aufgabe zugrunde, eine Vorrichtung zum Zerkleinern von Kunststoffgebilden mit geringer Materialstärke zur Verfügung zu stellen, bei der das Kunststoffmaterial ohne eine Verpressung unmittelbar dem Mahlreaktor zugeführt und hier-bei ausreichendem Durchsatz zerkleinert werden kann.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß der kreisrunde Mahlreaktor an seiner einen Stirnfläche eine Zufuhröffnung für die in Richtung der den Mahlreaktor durchsetzenden Rotorwelle axial in das Innere des Mahlreaktors zugeführten Kunststoffgebilde aufweist, und daß die radiale Höhe des Mahlreaktors größer als dessen axiale Breite ist, und an der Rotorwelle wenigstens ein umlaufender, der Kontur des Innenraumes des Mahlreaktors entsprechender Rotorflügel mit an seiner axial verlaufenden Außenkante sowie an einer radial zur Rotorwellenachse verlaufenden Außenkante befestigten Schneidmessern angeordnet ist, denen jeweils wenigstens ein am äußeren Umfang des Mahlreaktors sowie an dessen zufuhrseitigen Stirnfläche angeordnetes Gegenmesser zugeordnet ist.

Zunächst stellt ein wesentliches Merkmal der Erfindung die axiale Zufuhr des zu zerkleinernden Materials in den Mahlreaktor dar, bei der die Kunststoffgebilde seitlich zwischen die umlaufenden, messerbesetzten Rotorflügel eingeführt wird. Aufgrund der Formgebung für den Mahlreaktor mit einer verglichen mit der axialen Breite größeren radialen Höhe wird das zu zerkleinernde Material nach Eintritt in den Innenraum des Mahlreaktors zunächst durch die Fliehkraft nach außen gefördert und kann einen durch die radiale Höhe des Mahlreaktors vorgegebenen Weg zurücklegen. Auf diesem Weg erfolgt an der radial zur Rotorwellenachse nach außen verlaufenden messerbesetzten Außenkante des wenigstens einen Rotorflügels bei dessen Vorbeilauf an dem wenigstens einen ortsfesten Gegenmesser eine Vorzerkleinerung, bis das durch die Fliehkraft weiter nach außen an den äußeren Mantel des Mahlreaktors geförderte Mahlgut von der an der axial verlaufenden Außenkante des Rotorflügels angeordneten Messeranordnung bis auf diejenige Korngröße zerkleinert wird, in welcher es durch die Siebmaschen des Mantel-Siebgewebes austreten und abgefördert werden kann.

Nach Ausführungsbeispielen der Erfindung können sowohl an der Rotorwelle eine Mehrzahl von Rotorflügeln mit dazwischen gebildeten Kammern angeordnet wie auch über den Umfang des äußeren Mantels des Mahlreaktors verteilt mehrere Messeranordnungen bestehend aus jeweils zwei ortsfesten Gegenmessern angebracht sein. Durch das Vorsehen mehrerer Messeranordnungen wird die Zerkleinerungsleistung vergrößert.

Nach einem Ausführungsbeispiel der Erfindung ist vorgesehen, daß an den Rotorflügeln in deren Drehrichtung vorstehende und das Mahlgut zum äußeren Umfang des Mahlreaktors leitende Leitbleche angeordnet sind, wobei vorzugsweise sich die Leitbleche vom äußeren Ende des einen Rotorflügels zum Ansatz des in Drehrichtung folgenden Rotorflügels an der Rotorwelle erstrecken. Hiermit wird die Förderleistung für das in den zwischen den Rotorflügeln gebildeten Kammern befindliche Material zum äußeren Umfang des Mahlreaktors hin verbessert.

Nach einem Ausführungsbeispiel der Erfindung ist vorgesehen, daß die axiale Breite des Mahlreaktors an dessen äußerem Umfang kleiner ist als an der Rotowelle und die zufuhrseitige , mit wenigsten einem Gegenmesser besetzte Stirnfläche des Mahlreaktors schräg zur Rotorwellenachse angeordnet ist. Da sich aufgrund der einen schräg angeordneten, messerbesetzten Stirnseite des Mahlreaktors der Innenraum des Mahlreaktors nach außen verengt, wird mit abnehmender Korngröße des Mahlgutes entsprechend dessen Vorzerkleinerung die für eine ausreichende Zerkleinerungsleistung erforderliche Materialdichte im Innenraum des Mahlreaktors aufrechterhalten.

Nach einem Ausführungsbeispiel der Erfindung ist vorgesehen, daß mit einem geringen Abstand zu den Gegenmessern und in der Drehrichtung vor diesen jeweils eine Abweisleiste angeordnet ist; auch hierdurch soll die Schneidleistung verbessert werden. Dazu kann vorgesehen sein, der Abstand durch eine eingerichtete Verschiebbarkeit von Gegenmesser und/oder Abweisleiste an dem Mantel des Mahlreaktors einstellbar ist; derartige Einstellungen sind in Abhängigkeit von der gewünschten Korngröße des zu zerkleinernden Materials vorzunehmen.

Hinsichtlich der Ausbildung der Schneidmesser wie auch der Gegenmesser kann vorgesehen sein, daß Schneidmesser und Gegenmesser jeweils als gezackte Messerleisten mit einer Abfolge von Schneidzähnen und Vertiefungen ausgebildet sind, wobei die Schneidzähne der einen Leiste jeweils in die Vertiefungen der anderen Leiste eingreifen.

Der Durchsatz der Zerkleinerungsvorrichtung kann dadurch sichergestellt bzw. vergrößert werden, daß der äußere Mantel des Mahlreaktors von einem luftdichten und an ein Sauggebläse angeschlossenen Gehäuse umschlossen und ein den äußeren Mantel umschließender Saugkanal ausgebildet ist; soweit die Fliehkraftwirkung nicht dazu ausreicht, das gewichtsmäßig leichte, zerkleinerte Material durch die Maschen des Siebgewebes treten zu lassen, wird die Abförderung des bis auf die gewünschte Korngröße zerkleinerten Materials durch die zusätzlich aufgebrachte Saugwirkung verbessert. Hierzu ist nach einem Ausführungsbeispiel der Erfindung vorgesehen, daß sich der Durchmesser des Saugkanals vom Bereich der Zufuhröffnung zu einem am Ende des ringförmig den äußeren Mantel des Mahlreaktors umschließenden Saugkanals angeordneten Materialaustrag stufenlos vergrößert. Aufgrund des anwachsenden Durchmessers des Saugkanals ist einer Verstopfung des Förderweges vorgebeugt.

In der Zeichnung ist ein Ausführungsbeispiel der Erfindung wiedergegeben, welches nachstehend beschrieben ist. Es zeigen:
- Fig. 1: einen Mahlreaktor ohne Materialzufuhr in einer teilweise geschnittenen Seitenansicht,
- Fig. 2: den Mahlreaktor gemäß Fig. 1 in einer geschnittenen Stirnansicht,
- Fig. 3: den Gegenstand der Fig. 2 einschließlich Materialzufuhr in einer ergänzenden schematischen Darstellung,
- Fig. 4: den Gegenstand der Fig. 3 in einer schematisierten Seitenansicht.

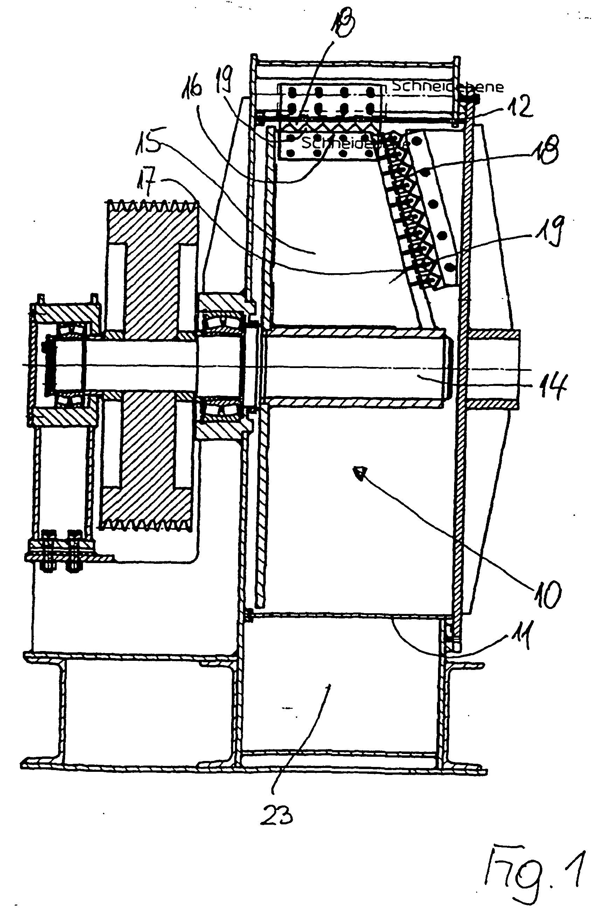

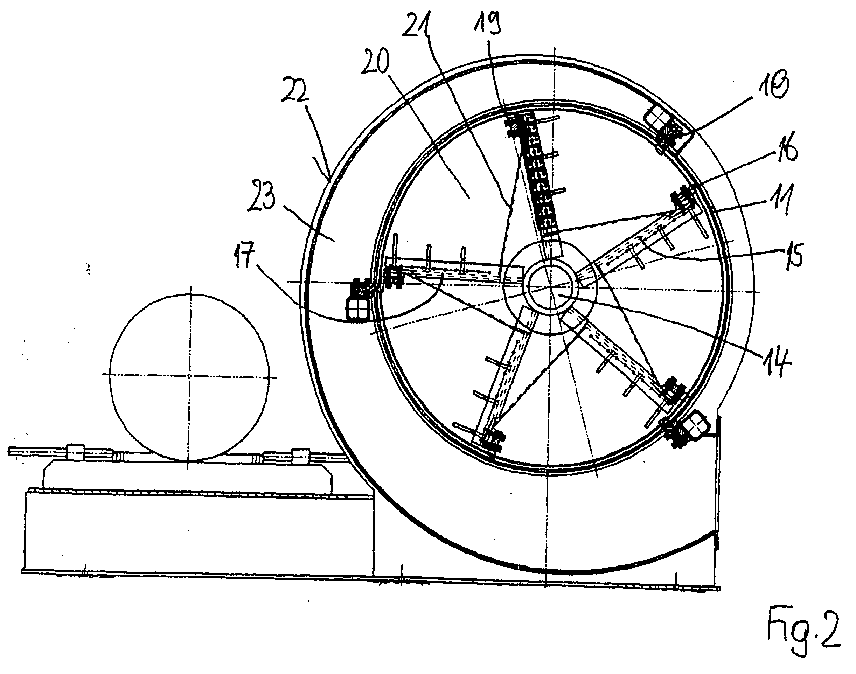

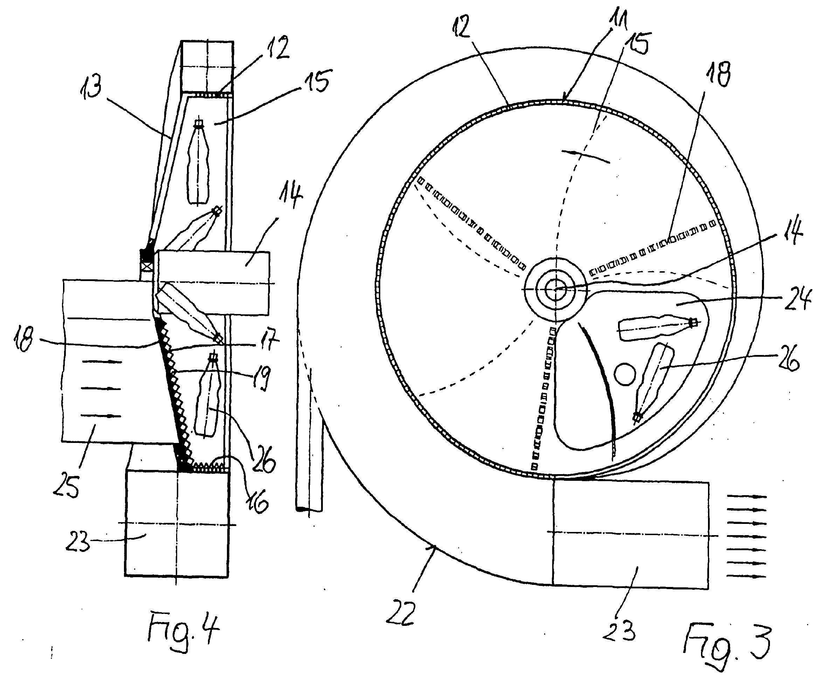

Der aus Fig. 1 ersichtliche Mahlreaktor 10 weist hinsichtlich seines Innenraumes eine kreisrunde Form (Fig. 2) auf und umschließt den Innenraum mit einem äußeren Mantel 11, der aus einem Siebgewebe 12 besteht. Während die eine Stirnfläche des Mahlreaktors 10 senkrecht zur Längsachse einer den Mahlreaktor 10 quer durchsetzenden Rotorwelle 14 angeordnet ist, ist die gegenüberliegende Stirnfläche 13 in einem Winkel zur Längsachse der Rotorwelle 14 angeordnet, und zwar dergestalt, daß die axiale Breite des Mahlreaktors an seinem äußeren Umfang kleiner ist als im Bereich der Rotorwelle 14, wobei in der schräg angeordneten Stirnfläche eine Zufuhröffnung 24 für das zu zerkleinernde Kunststoffmaterial angeordnet ist (Fig. 3, 4).

An der Rotorwelle 14 sind bei dem dargestellten Ausführungsbeispiel fünf gleichmäßig über den Umfang verteilt angeordnete Rotorflügel 15 angebracht, deren Form auf die beschriebenen Innenabmessungen des Mahlreaktörs 10 abgestimmt ist. Insoweit weisen die als vollflächige Bleche ausgebildeten Rotorflügel 15 eine kürzere axiale Außenkante 16 und eine schräg zur Rotorwellenachse verlaufende Außenkante 17 auf. Die Außenkanten 16 und 17 sind jeweils mit Schneidmessern 19 besetzt, die als einzelne quadratische Hartmetallplättchen ausgeführt und in den Figuren entsprechend angedeutet sind. Über den Umfang des äußeren Mantels 11 verteilt sind bei dem dargestellten Ausführungsbeispiel drei Gegenmesser 18 angeordnet, die sich parallel zu den von den Rotorflügeln 15 getragenen Messerleisten erstrecken. Gegenmesser 18 und Schneidmesser 19 sind in gegenseitiger Entsprechung jeweils als gezackte Messerleisten mit einer Abfolge von Schneidzähnen und Vertiefungen ausgebildet, wobei die Schneidzähne der einen Messerleiste jeweils in die Vertiefungen der anderen Messerleiste eingreifen, hierbei aber einen geringen Abstand - je nach der gewünschten Korngröße im MillimeterBereich bzw. Zehntelmillimeter-Bereich - einhalten. Wie sich aus Fig. 2 ergibt, sind an den Rotorflügeln 15 in deren Drehrichtung vorstehende Leitbleche 21 angeordnet, die sich vom äußeren Ende des einen Rotorflügels 15 zum Ansatz des in Drehrichtung folgenden Rotorflügels 15 an der Rotorwelle 14 erstrecken und dadurch einerseits die zwischen den Rotorflügeln 15 befindlichen Kammern 20 verkleinern und andererseits für eine Verbesserung der Förderung des Mahlgutes längs der Leitbleche 21 zum äußeren Umfang der Rotorflügel sorgen.

Um die Abförderung des zerkleinerten Materials durch das Siebgewebe 12 des äußeren Mantels 11 des Mahlreaktors 10 zu verbessern, ist der äußere Mantel 11 von einem Gehäuse 22 umschlossen, welches an ein nicht dargestelltes Sauggebläse angeschlossen ist und dadurch einen den äußeren Mantel 11 ringförmig umschließenden Saugkanal 23 ausbildet. Wie sich deutlicher aus den Fig. 3 und 4 mit einer schematisierten Darstellung des Gegenstandes der Fig. 1 und 2 ergibt, ist die in der Stirnfläche 13 ausgebildete und an einen Luftkanal 25 angeschlossene Zufuhröffnung 24 bezogen auf die Mittelachse der Rotorwelle 14 in einem unteren Quadranten angeordnet, wobei der Saugkanal 23 auch im Bereich dieses Quadranten seinen Ausgang nimmt und sich in seinem Durchmesser zu einem am Ende des den Mahlreaktor ringförmig umschließenden Saugkanals angeordneten Materialaustrag stufenlos vergrößert. In den Fig. 3 und 4 ist anhand von mit 26 bezeichneten PET-Flaschen - dargestellt, wie diese über die Zufuhröffnung 24 in das Innere des Mahlreaktors 10 eingetragen werden. Die Flaschen 26 werden durch die einwirkende Fliehkraft, unterstützt durch die Leitbleche 21, mit der Drehung der Rotorflügel 15 nach außen gefördert, wobei aufgrund der nahe der Rotorwelle 14 geringeren Geschwindigkeit der an der radialen Kante 17 angeordneten Schneidmesser 19 eine Vorzerkleinerung-der Flaschen 26 erfolgt, bis die vorzerkleinerten Flaschen nach außen wandern und hier von den axial angeordneten Messern 18, 19 weiter zerkleinert werden.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein, so lange sie unter den Schutzumfang der Ansprüche fallen.

## Patentansprüche

1. Vorrichtung zum Zerkleinern von Kunststoffgebilden mit geringer Materialstärke wie PET-Flaschen, Bechern, Folien oder dergleichen, mit einem Mahlreaktor (10), dessen äußerer Mantel (11) wenigstens teilweise durch ein Siebgewebe (12) gebildet und in dem wenigstens ein feststehendes Gegenmesser (18) angeordnet ist, und in dessen Innenraum ein Rotor mit wenigstens einem davon getragenen Schneidmesser (19) umläuft, sowie mit einer Zuführung für die zu zerkleinernden Kunststoffgebilde, **dadurch gekennzeichnet, daß** der kreisrunde Mahlreaktor (10) an seiner einen Stirnfläche (13) eine Zufuhröffnung (24) für die in Richtung der den Mahlreaktor (10) durchsetzenden Rotorwelle (14) axial in das Innere des Mahlreaktors (10) zugeführten Kunststoffgebilde (26) aufweist, und daß die radiale Höhe des Mahlreaktors (10) größer als dessen axiale Breite ist und an der Rotorwelle (14) wenigstens ein umlaufender, der Kontur des Innenraumes des Mahlreaktors (10) entsprechender Rotorflügel (15) mit an seiner axial verlaufenden Außenkante (16) sowie an einer radial zur Rotorwellenachse verlaufenden Außenkante (17) befestigten Schneidmessern (19) angeordnet ist, denen jeweils wenigstens ein am äußeren Umfang des Mahlreaktors (10) sowie an dessen zufuhrseitiger Stirnfläche (13) angeordnetes Gegenmesser zugeordnet ist.

2. Zerkleinerungsvorrichtung nach Anspruch 1, **dadurch gekennzeichnet, daß** an der Rotorwelle (14) eine Mehrzahl von Rotorflügeln (15) mit dazwischen ausgebildeten Kammern (20) angeordnet sind.

3. Zerkleinerungsvorrichtung nach Anspruch 1 oder 2, **dadurch gekennzeichnet, daß** an dem äußeren Mantel (11) des Mahlreaktors (10) über dessen Umfang verteilt mehrere Messeranordnungen bestehend aus jeweils zwei Gegenmessern (18) angebracht sind.

4. Zerkleinerungsvorrichtung nach einem der Ansprüche 1 bis 3, **dadurch gekennzeichnet, daß** an den Rotorflügeln (15) in deren Drehrichtung vorstehende und das Mahlgut (26) zum äußeren Umfang des Mahlreaktors (10) leitende Leitbleche (21) angeordnet sind.

5. Zerkleinerungsvorrichtung nach Anspruch 4, **dadurch gekennzeichnet, daß** sich die Leitbleche (21) vom äußeren Ende des einen Rotorflügels (15) zum Ansatz des in Drehrichtung folgenden Rotorflügels (15) an der Rotorwelle (14) erstrecken.

6. Zerkleinerungsvorrichtung nach einem der Ansprüche 1 bis 5, **dadurch gekennzeichnet, daß** die axiale Breite des Mahlreaktors (10) an dessen äußerem Umfang kleiner ist als an der Rotorwelle (14) und die zufuhrseitige, mit wenigstens einem Gegenmesser (18) besetzte Stirnfläche (13) des Mahlreaktors (10) schräg zur Rotorwellenachse angeordnet ist.

7. Zerkleinerungsvorrichtung nach einem der Ansprüche 1 bis 6, **dadurch gekennzeichnet, daß** mit einem geringen Abstand zu den Gegenmessern (18) und in der Drehrichtung vor diesen jeweils eine Abweisleiste angeordnet ist.

8. Vorrichtung nach Anspruch 7, **dadurch gekennzeichnet, daß** der Abstand durch eine eingerichtete Verschiebbarkeit von Gegenmesser (18) und/oder Abweisleiste an dem Mantel (11) des Mahlreaktors (10) einstellbar ist.

9. Zerkleinerungsvorrichtung nach einem der Ansprüche 1 bis 8, **dadurch gekennzeichnet, daß** Schneidmesser (19) und Gegenmesser (18) jeweils als gezackte Messerleisten mit einer Abfolge von Schneidzähnen und Vertiefungen ausgebildet sind, wobei die Schneidzähne der einen Leiste (18, 19) jeweils in die Vertiefungen der anderen Leiste (18, 19) eingreifen.

10. Zerkleinerungsvorrichtung nach einem der Ansprüche 1 bis 9, **dadurch gekennzeichnet, daß** der äußere Mantel (11) des Mahlreaktors (10) von einem luftdichten und an ein Sauggebläse angeschlossenen Gehäuse (22) umschlossen und ein den äußeren Mantel (11) umschließender Saugkanal (23) ausgebildet ist.

11. Zerkleinerungsvorrichtung nach Anspruch 10, **dadurch gekennzeichnet, daß** sich der Durchmesser des Saugkanals (23) vom Bereich der Zufuhröffnung (24) zu einem am Ende des ringförmig den äußeren Mantel (11) des Mahlreaktors (10) umschließenden Saugkanals (23) angeordneten Materialaustrag stufenlos vergrößert.

## Revendications

1. Dispositif de broyage de structures en matière plastique avec une faible épaisseur de matériau, telles que les bouteilles en PET, les gobelets, les films et objets similaires, comportant un réacteur de broyage (10) dont l'enveloppe externe (11) est formée au moins partiellement d'un tissu filtrant (12) et dans lequel est disposé au moins un couteau fixe (18) et dans l'espace interne duquel tourne un rotor avec au moins une lame coupante (19) portée par celui-ci ainsi qu'avec une amenée pour les structures en matière plastique à broyer, **caractérisé en ce que** le réacteur de broyage circulaire (10) comporte, sur sa surface frontale (13), une ouverture d'amenée (24) pour les structures en matière plastique (26) amenées dans le sens axial dans l'intérieur du réacteur de broyage (10) en direction de l'arbre rotor (14) traversant le réacteur de broyage (10) et **en ce que** la hauteur radiale du réacteur de broyage (10) est supérieure à sa largeur axiale et, sur l'arbre rotor (14), est disposée au moins une aile de rotor (15) rotative, correspondant au contour de l'espace interne du réacteur de broyage (10), comportant des lames de coupe (19) fixées sur son arête externe (16) s'étendant dans le sens axial ainsi que sur une arête externe (17) s'étendant dans le sens radial par rapport à l'axe de l'arbre rotor, lames auxquelles est attribué au moins un couteau disposé sur la circonférence externe du réacteur de broyage (10) ainsi que sur sa surface frontale (13) située du côté de l'amenée.

2. Dispositif de broyage selon la revendication 1, **caractérisé en ce qu'**une multitude d'ailes de rotor (15), avec des chambres (20) réalisées entre elles, est disposée sur l'arbre rotor (14).

3. Dispositif de broyage selon la revendication 1 ou 2, **caractérisé en ce que** plusieurs dispositifs à couteaux, composés chacun de deux couteaux (18), sont installés sur l'enveloppe externe (11) du réacteur de broyage (10), répartis sur sa circonférence.

4. Dispositif de broyage selon l'une quelconque des revendications 1 à 3, **caractérisé en ce que** sont disposés, sur les ailes de rotor (15), des déflecteurs (21) s'avançant dans leur direction de rotation et conduisant le produit à broyer (26) vers la circonférence externe du réacteur de broyage (10).

5. Dispositif de broyage selon la revendication 4, **caractérisé en ce que** les déflecteurs (21) s'étendent sur l'arbre de rotor (14), de l'extrémité externe d'une aile de rotor (15) à l'embase de l'aile de rotor (15) la suivant dans le sens de rotation.

6. Dispositif de broyage selon l'une quelconque des revendications 1 à 5, **caractérisé en ce que** la largeur axiale du réacteur de broyage (10) est moins importante sur sa circonférence externe que sur l'arbre rotor (14) et la surface frontale (13), du côté de l'amenée, du réacteur de broyage (10), équipée d'au moins un couteau (18), est disposée en biais par rapport à l'axe d'arbre rotor.

7. Dispositif de broyage selon l'une quelconque des revendications 1 à 6, **caractérisé en ce qu'**une barre d'éjection est disposée à un faible écartement des couteaux (18) et devant ceux-ci dans le sens rotatoire.

8. Dispositif selon la revendication 7, **caractérisé en ce que** l'écartement est réglable par une mobilité ajustée du couteau (18) et/ou de la barre d'éjection sur l'enveloppe (11) du réacteur de broyage (10).

9. Dispositif de broyage selon l'une quelconque des revendications 1 à 8, **caractérisé en ce que** la lame de coupe (19) et le couteau (18) sont réalisés chacun sous la forme de barres à lames dentelées avec une série de dents coupantes et de creux, les dents coupantes d'une barre (18, 19) s'engrenant dans les creux de l'autre barre (18, 19).

10. Dispositif de broyage selon l'une quelconque des revendications 1 à 9, **caractérisé en ce que** l'enveloppe externe (11) du réacteur de broyage (10) est entourée d'un boîtier (22) étanche à l'air et raccordé à un ventilateur aspirant, et **en ce qu'**est réalisé un canal d'aspiration (23) entourant l'enveloppe externe (11).

11. Dispositif de broyage selon la revendication 10, **caractérisé en ce que** le diamètre du canal d'aspiration (23) s'agrandit en continu de la zone de l'ouverture d'amenée (24) à un évidement de matériau disposé à l'extrémité du canal d'aspiration (23) entourant de manière circulaire l'enveloppe externe (11) du réacteur de broyage (10).

## Claims

1. Apparatus for the comminution of plastics materials of low material thickness such as PET bottles, beakers, films or the like, with a grinding reactor (10) whose outer jacket (11) is formed at least partly by a screen fabric (12) and in which is arranged at least one fixed counter-blade (18), and in the interior of which rotates a rotor with at least one cutting blade (19) mounted thereon, as well as with a feed for the plastics materials to be comminuted, **characterised in that** the circular grinding reactor (10) has on its front face (13) a feed opening (24) for the plastics materials (26) fed axially into the interior of the grinding reactor (10) in the direction of the rotor shaft (14) passing through the said grinding reactor (10), and that the radial height of the grinding reactor (10) is greater than its axial width and at least one rotating rotor vane (15) corresponding to the contour of the interior of the grinding reactor (10) with cutting blades (19) secured to its axially running outer edge (16) as well as to an outer edge (17) running radially to the rotor shaft axis is arranged on the rotor shaft (14), at least one counter-blade arranged on the outer circumference of the grinding reactor (10) as well as on its feed-side front face (13) being associated in each case with the said cutting blades.

2. Comminution apparatus according to claim 1, **characterised in that** a plurality of rotor vanes (15) with chambers (20) formed therebetween are arranged on the rotor shaft (14).

3. Comminution device according to claim 1 or 2, **characterised in that** a plurality of blade arrangements consisting in each case of two counter-blades (18) are mounted on the outer jacket (11) of the grinding reactor (10) and distributed over its circumference.

4. Comminution apparatus according to one of claims 1 to 3, **characterised in that** guide plates (21) are arranged on the rotor vanes (15) and project in the direction of rotation of the latter and guide the material (26) to be ground to the outer circumference of the grinding reactor (10).

5. Comminution apparatus according to claim 4, **characterised in that** the guide plates (21) extend on the rotor shaft (14) from the outer end of one rotor vane (15) to the shoulder of the rotor vane (15) following in the direction of rotation.

6. Comminution apparatus according to one of claims 1 to 5, **characterised in that** the axial width of the grinding reactor (10) at its outer circumference is less than at the rotor shaft (14) and the feed-side front face (13) of the grinding reactor (10) fitted with at least one counter-blade (18) is arranged inclined to the rotor shaft axis.

7. Comminution apparatus according to one of claims 1 to 6, **characterised in that** a deflecting strip is arranged in each case at a small distance to the counter-blades (18) and in the direction of rotation thereof.

8. Apparatus according to claim 7, **characterised in that** the distance can be adjusted by a designed displaceability of the counter-blade (18) and/or deflecting strip on the jacket (11) of the grinding reactor (10).

9. Comminution apparatus according to one of claims 1 to 8, **characterised in that** cutting blades (19) and counter-blades (18) are configured in each case as serrated blade strips with a succession of cutting teeth and depressions, in which the cutting teeth of one strip (18, 19) engage in each case in the depressions of the other strip (18, 19).

10. Comminution apparatus according to one of claims 1 to 9, **characterised in that** the outer jacket (11) of the grinding reactor (10) is enclosed by an airtight housing (22) connected to a suction fan and a suction channel (23) is formed that surrounds the outer jacket (11).

11. Comminution apparatus according to claim 10, **characterised in that** the diameter of the suction channel (23) increases continuously from the region of the feed opening (24) to a material removal device arranged on the end of the suction channel (23) enclosing in an annular manner the outer jacket (11) of the grinding reactor (10).
